Europäisches Patentamt

(19) European Patent Office

Office européen des brevets

(11) Publication number : **0 507 575 A1**

## (12) EUROPEAN PATENT APPLICATION

(21) Application number : 92302891.4

(22) Date of filing : 02.04.92

(51) Int. Cl.⁵ : **B65G 17/20**, A24C 5/35,
B65B 41/12, // B65G17/34,
A24C5/20

(30) Priority : 03.04.91 US 679756

(43) Date of publication of application :
07.10.92 Bulletin 92/41

(84) Designated Contracting States :
AT BE CH DE DK ES FR GB GR IT LI LU MC NL
PT SE

(71) Applicant : Philip Morris Products Inc.
3601 Commerce Road
Richmond Virginia 23234 (US)

(72) Inventor : Grollimund G.
9829 Pampas Drive
Chesterfield, Virginia 23832 (US)
Inventor : Junginger, H.
Augustastrasse 2
W-2050 Hamburg 80 (DE)

(74) Representative : LLOYD, Patrick Alexander
Desmond et al
Reddie & Grose 16 Theobalds Road
London WC1X 8PL (GB)

(54) Universal material carrier and overhead monorail system.

(57) An apparatus and method to transporting materials throughout a factory using universal material carriers (10) that are movably mounted to overhead rails (60) and loading (20) and unloading (40) stations for, respectively, loading and unloading materials onto and off of the universal material carriers (10).

FIG.1

EP 0 507 575 A1

## Background Of the Invention

The present invention relates to an apparatus and method for transporting supplies, components or other materials, typically in a factory setting, from one place to another. More particularly, the present invention relates to apparatus for transporting a variety of cigarette and packaging components to the manufacturing and packaging areas of a cigarette manufacturing and packaging operation.

High speed cigarette manufacturing facilities typically have work stations known as modules where cigarette manufacturing and packaging machinery operate to form wrapped tobacco rods, cut the rods and optionally tip them with filters to form cigarettes, gather a predetermined number of cigarettes and insert or wrap them in packaging materials to form packs and then gather a predetermined number of packs and insert or wrap them in other packaging materials to form cartons of cigarette packs. The cartons typically are then transported away from the modules for further processing or shipment.

The operation of the manufacturing modules requires techniques and apparatus to supply the modules with the various materials required to manufacture and package cigarettes. Among the required materials are: cigarette paper, tipping paper, carton blanks, pack blanks, carton overwrap, foil, pack innerframe and pack film overwrap. These materials comprise over 90% by weight of the components, excluding tobacco and filters, that typically are used to manufacture and package cigarettes.

A number of techniques for supplying these materials to manufacturing modules are known. One such technique is to carry these materials by hand, or in hand trucks or carts, to the modules as needed. Another technique, which is widely used, is to pack carts with components in the quantities that are expected to be used by the modules in one factory shift such that one cart holds all the components required by one module; then, at the beginning of a shift, each cart is moved to a location near a module; as the module uses up its loaded supply of a given component, an operator takes an additional amount of the needed component and loads it into the receiving apparatus of the module, typically by hand.

Another known technique, as described in U.S. Patent No. 4,907,689, is to supply some of the components -- those which are wound on reels -- to a module using specialized material carriers; known as reel carriers, that move along an overhead rail system between loading stations and the modules. Each component requires a carrier especially designed to be able to carry that particular component. Likewise, each component requires its own loading station for loading the component onto the specialized carrier. After a reel carrier is loaded in a loading station it must be rotated,180° 'in order to be properly be unloaded at the module. Other components -- including those which are supplied in stacks rather than rolls and those which do come as rolls, but for which there are no specialized reel carriers -- must be supplied to the modules by other methods. Commercial modifications of this system have material carriers capable of carrying any of pack film overwrap, foil and-pack innerframe.

The invention is defined by the independent claims to which reference should be made.

A preferred embidiment of the present invention alleviates to a great extent the disadvantages of the prior art by providing a universal material carrier which is capable of carrying any of a number of different cigarette manufacturing and packaging components, including components that are supplied on rolls and components that are supplied in stacks, and an overhead rail transport system that employs: an overhead rail, universal material carriers that are movably mounted on the overhead rail, at least one loading station that is capable of loading components onto a universal material carrier, and unloading stations for unloading materials from the universal material carriers.

The overhead rail transport system may use any type of rail, or combination of rails, such as parallel rails or "C" shaped rails, although in the preferred embodiment, a monorail with a simple I-shaped cross-section is used. Also in the preferred embodiment, a computer feedback and control system ("control system") is used, which detects when a module requires a new supply of a given component and arranges for a carrier to move to a loading station to receive the required supply and then move along the overhead rail system to the module. Also in the preferred embodiment, a plurality of loading stations are used such that a given loading station loads only one type of material onto universal material carriers.

The universal material carriers and loading stations of the present invention may be used in conjunction with the overhead rail system and unloading system described in above-mentioned U.S. Patent No. 4,907,689. They also may be used separately or in conjunction with other apparatus and in any operation requiring the supply of components to manufacturing areas.

An advantage of a preferred embodiment of the present invention is that specialized reel carriers are not required. Rather, a universal material carrier is provided, which is capable of carrying many different components, including components that come on rolls and those which come in stacks.

Another advantage of a preferred embodiment is that specialized loading stations are not required. Rather, a loading station equipped with a set of change-over elements can load any desired component onto a universal material carrier.

Yet another advantage of a preferred embodiment is that the universal material carrier is not required to be rotated or othewise re-oriented after it is loaded in order to be unloaded.

A further advantage of apparatus embodying the present invention is that a simplified overhead monorail system is employed.

Still another advantage is that most of the components required by a cigarette manufacturing and packaging module may be transported by apparatus embodying the present invention rather than by hand or by carts.

An embodiment of the invention will now be described with reference to the accompanying drawings, in which:

FIG. 1 is plane view of the overhead rail system according to the invention;

FIG. 2 is a side view of a loading platform and universal material carrier according to the present invention;

FIG. 3 is a top view of a loading platform and universal material carrier according to the present invention;

FIG. 4 is a front view of a universal material carrier according to the invention; and

FIG. 5 is a side view of a universal material carrier according to the invention.

The elements of the universal material carrier and overhead rail system of the present invention operate in concert to deliver materials , throughout a factory. In general, the system comprises a number of universal material carriers 10, at least one loading station 20 for each type of material to be transported, a loading platform 30, and a number of unloading stations 40 that operate to transfer materials from the universal material carriers to manufacturing modules 50. The universal material carriers travel among the loading stations 20 and unloading stations 40 along an overhead rail 60. In a typical factory, there are several manufacturing modules 50. Each module may have one or more unloading stations 40, the number and location of the unloading stations 40 being determined by the requirements of the manufacturing operation.

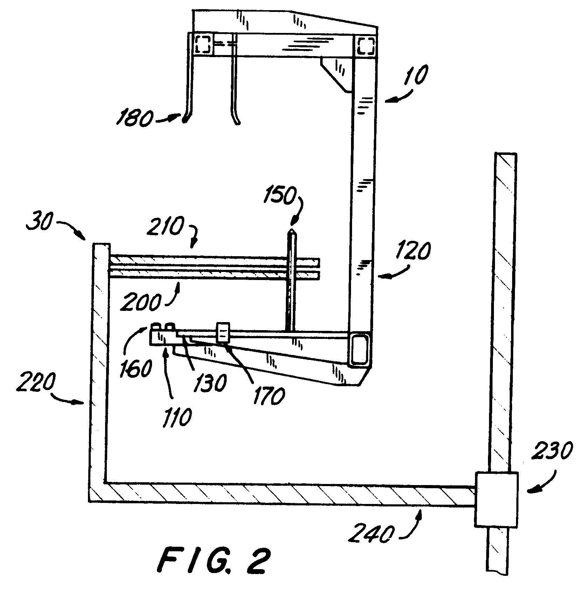

In operation, materials required by a manufacturing module 50 are loaded at a loading station 20 onto a loading platform 30. The loading platform is then lifted by any means, such as pulleys or a motorized elevator to a predetermined level. A universal material carrier 10 then moves into the receiving position, as depicted in FIG. 2, and picks up the materials from the loading platform 30. Each , universal material carrier is preferably is propelled by a motor and is positioned by a control system, which may include computers and infra-red detection devices. The loaded universal material carrier 10 then moves either to a staging area or directly to an unloading station 40, as instructed by the control system. At the unloading station 40, the materials are transferred from the universal material carrier to an unloading platform. The unloading platform then moves to a desired height off the ground and the materials are transferred, either to a storage area at the manufacturing module 50, or directly into use in a manufacturing operation.

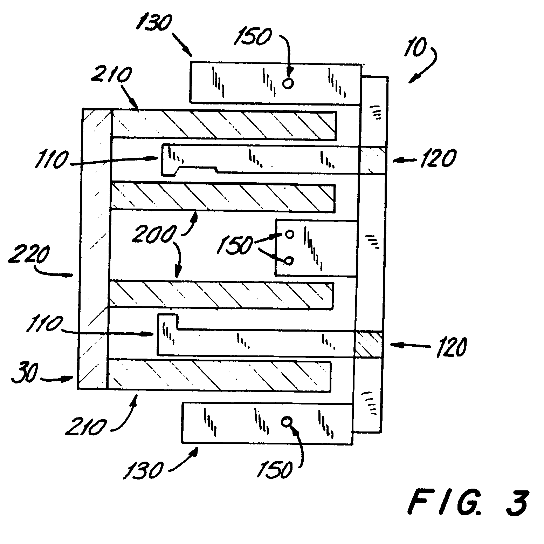

The universal material carrier 10 of the present invention is generally a "C" shaped unit having carrying elements 110, 130 for cradling or carrying components of varying shapes and sizes. Likewise, the loading platform 30 of the present invention has carrying elements 200, 210 for cradling and lifting components of varying shapes. The carrying elements 110, 130 of the universal material carrier 10 and the carrying elements 200, 210 of the loading platform 30 are arranged such that, when the universal material carrier 10 is in position to be loaded (as depicted in FIGS. 2 and 3), the carrying elements 200, 210 of the loading platform are aligned with the spaces between and outside the carrying elements 110, 130 of the universal material carrier 10. When the loading platform 30 is lowered, its carrying elements 200, 210 pass unobstructed through the spaces between the carrying elements 110, 130 of the universal material carrier 10.

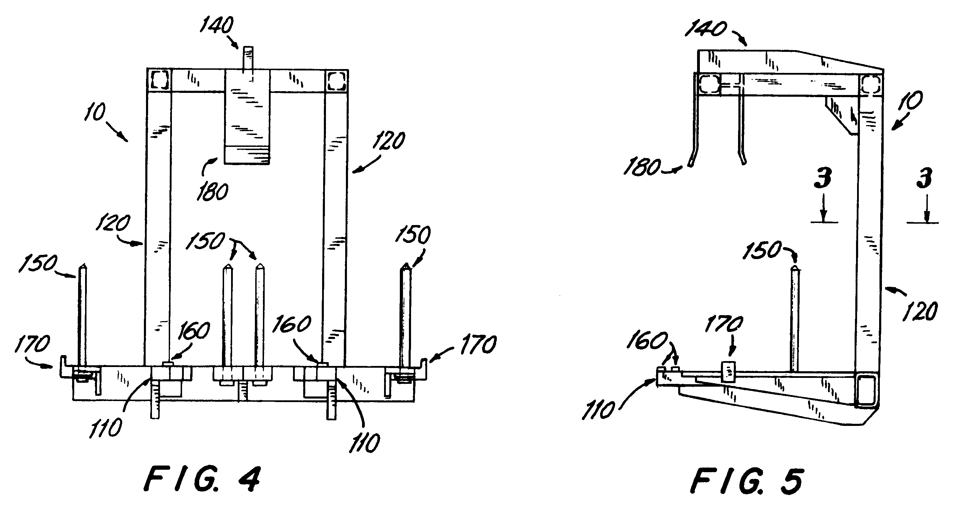

Any number or arrangement of carrying elements may be used in universal material carriers 10 and loading platforms 30. In the preferred embodiment, depicted in FIGS. 2-6, which is suited to cigarette manufacturing operations, the universal material carrier 10 has two generally parallel nesting arms 110 that protrude in a generally perpendicular direction from upright supports 120. The nesting arms 110 serve to position and support cigarette components that are supplied on bobbins. Two flat arms 130 are located outside of the nesting arms 110 and are oriented such that their top surfaces are roughly in the same plane as the top surfaces of the nesting arms 110. The upright supports 120 are connected at their top ends (above the carrying elements 110, 130) to an apparatus 140 that connects to the overhead rail 60.

The carrying elements 110, 130 are arranged to support a variety of materials. Supporting and orienting elements, such as rods 150, spring loaded limiting buttons 160, L-limits 170 and an upper bracket 180 may also be incorporated into the universal material carrier 10, depending on the shape and size of the materials desired to be transported.

For example, in the preferred embodiment cigarette manufacturing operation, four rods 150 extend perpendicular to the top surfaces of the carrying elements 110, 130. These rods 150 provide registration points for materials such as stacks of carton blanks and rear nesting points for cases of pack blanks. Limiting buttons 160 located at the end of the nesting arms 110 serve as front stops for cases of pack blanks. Since cases of pack blanks have various dimensions, more than one limiting button 160 can be provided (in the preferred embodiment there are two limiting buttons 160 on each nesting arm 110). One side of a large case is nested against the rods 150 while the other side nests against the outermost limiting buttons; the innermost buttons (which are spring loaded) are depressed by the underside of the large case. Smaller cases are positioned on the universal material carrier in a similar fashion, except that the innermost limiting buttons serve as the nesting points for the outer side of the cases. L-limits 170 on the outer edges of the flat arms serve as guides to orient pack blank cases. Bobbin materials rest on the inner nesting arms 110 such that small diameter bobbins rest lower between the nesting arms than large diameter bobbins. An inverted "U" shaped bracket 180 optionally may be included to provide added stability for large diameter bobbins.

Any connecting apparatus 140 which provides sufficient support for the loads that are expected to be borne by the universal material carrier 10 may be used. The connecting apparatus 140 preferably incorporates a propelling apparatus which serves to control the movement the universal material carrier 10 along the overhead rail 60. In the preferred embodiment, the connecting apparatus incorporates a motor, wheels, an on-board computer and infra-red detection devices. The on-board computer in this embodiment operates in conjunction with the motor to position the universal material carrier 10 as desired. For example, if a manufacturing module 50 is running low on a needed component, a requisition signal is sent from the module 50 to a central computer. The requisition signal contains information on the identity of the requesting module 50, including its location, the identity of the component desired and, optionally, the location of the unloading station 40 to which the component is to be delivered and the quantity of material desired. The central computer stores or processes the requisition signal as required and then sends a delivery signal to a universal material carrier 10 containing information regarding the identity of the component to be delivered, the identity or location of the manufacturing module 50 or unloading station 40 that is the target of the delivery and, optionally, the location of the loading station from which the universal material carrier is to receive the component. The central computer may optionally receive requisition signals from more than one module 50. In such an embodiment, the central computer may store requisition instructions and send delivery signals to universal material carriers 10 at spaced time intervals in order to promote efficient operation of the system and avoid bottlenecks.

In the preferred embodiment, there are several universal material carriers 10 mounted to the overhead rail 60 at any given time. Universal material carriers 10 that are not making deliveries or unloading or loading materials proceed to a staging area 190. When the central computer sends a delivery signal, it is sent to one of these unoccupied universal material carriers 10 in the staging area 190. The delivery signal is in a form that can be received and understood by the on-board computer. The on-board computer then actuates the motor to move the universal material carrier to the desired loading station 20 where it receives a load of materials. Then the on-board computer actuates the motor such that the universal material carrier 10 moves along the overhead rail 60 to the desired unloading station 40 at the manufacturing module 50. After unloading, the on-board computer actuates the motor to return the universal material carrier 10 to the staging area 190.

The delivery and requisition signals may be transmitted by any means including wires, radio transmission or infra-red transmission. In the preferred embodiment, each universal material carrier 10 has an on-board infra-red receiving device, which receives delivery signals transmitted from the central computer.

The loading platforms 30 have supporting elements 200, 210 that are arranged to provide ease of loading and stability for materials being loaded. The configuration of the supporting elements 200, 210 maybe specialized for the type of material to be loaded. For example, if boxes are to be loaded, four flat supporting elements 200, 210 are desirable; if large diameter bobbins are to be loaded, a wide space between the center elements is desirable and the elements may be angled; and if small diameter bobbins are desired a smaller space between the center elements can be used. In the preferred embodiment, the supporting elements of each loading platform can be changed over or rearranged, depending upon the configuration desired.

In the preferred embodiment, there is at least one loading station 20 for each material that is to be delivered to the modules 50, eliminating the need for change-over elements. For example, in cigarette manufacturing operations, there are eight components (cigarette paper, tipping paper, carton blanks, blanks, carton overwrap, foil, pack innerframe and pack film overwrap) comprising over 90% of the materials required for packaging cigarettes. In a cigarette manufacturing facility, therefore, it is preferred that there be one loading station 20 for each of these eight components. Alternatively, a single loading station 20 equipped with change-over members loads all materials or a group of materials.

The carrying elements 200, 210 of the loading platform 30 are fixed to a vertical support frame 220. The vertical support frame 220 is attached to an elevator apparatus 230, which is capable of raising and lowering the carrying elements 200, 210, the support frame 220 and materials that are borne by the carrying elements. Any elevator apparatus may be used, including pulleys, gears or a motorized elevator, as long as the elevator apparatus is capable of lifting the carrying elements 200, 210 to a height that clears the carrying elements 110, 130 and any other supporting and orienting elements 150, 160, 170 of the universal material carrier 10. In the preferred embodiment depicted in FIG. 2, the vertical support frame 220 is attached to a horizontal support 240, which in turn is attached to the elevator apparatus 230.

In operation, materials are transferred from a loading platform 30 to a universal material carrier 10 as follows. Materials are loaded on to the loading platform 30. This loading step may be done by hand, or with the assistance of tools such as robotic instruments, carts or conveyors. The elevator 230 then operates to lift the loading platform 30 to a predetermined height above the ground that clears the height of the universal material carrier 10 and its carrying, supporting and orienting elements. The universal material carrier 10 then moves into position such that its carrying elements are directly below the carrying elements of the loading platform 30 and are aligned either with spaces between or spaces outside the carrying elements of the loading platform 30. The loading platform 30 is then lowered by the elevator 230 such that the loading platform 30 is below the bottom of the universal material carrier 10. The materials that had been resting on the loading platform 30 are thereby transferred to the universal material carrier 10.

Materials are unloaded from the universal material carrier 10 in a similar fashion at unloading stations 40.

In one embodiment of this invention, the apparatus at an unloading station 40 is the same as that at a loading station 20 and is used to unload materials. In this embodiment, the loaded universal material carrier 10 moves into position at the unloading station 40. The loading platform (here being used as an unloading platform) is then elevated to a height that clears all the carrying, supporting and orienting elements on the universal material carrier 10. At that height, the materials that had been borne on the universal material carrier 10 are borne by the loading platform. The universal material carrier then moves along the overhead rail 60 away from the unloading station 60 and the loading platform is lowered to the desired level. The materials then can be transferred for use in manufacturing or for storage near the module 50.

In the preferred embodiment, there are specialized unloading stations 40, each being designed to handle a given material or group of materials. For example, one unloading station 40 can be located adjacent to the packing machine in a module, its function being to unload carton or pack blanks and load them into the packing machine. Another unloading station 40 can be located adjacent to the cigarette making machine, its function being to unload bobbins of cigarette paper and tipping paper and load them into the cigarette making machine. In this embodiment, specialized unloading platforms may be used at each unloading station. These specialized unloading platforms may operate in conjunction with other apparatus to automatically feed materials into the manufacturing machinery.

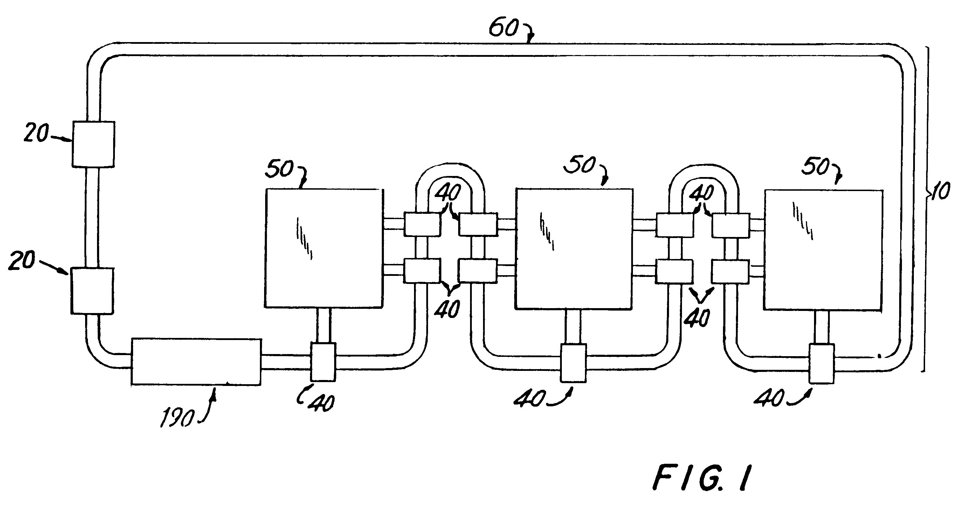

The overhead rail 60 of the present invention may have a starting point and an ending point, which are not connected. In the preferred embodiment, however, the overhead rail is arranged in a closed loop, as depicted in FIG. 1. The advantage of a closed loop is that material carriers can move generally in one direction along the loop, rather than having to move back and forth between loading and unloading stations. The overhead rail 60 may be of any construction that can support the desired loads. Preferably, and most economically, it is a single rail with a simple "I"-shaped cross-section. However other rail constructions may be used, such as a dual rail system, in which two I-shaped rails run parallel to each other or the dual "C" rails discussed U.S. Patent No. 4,907,689.

Thus, it is seen that a universal material carrier and overhead rail system is provided. Also, a method is provided for transporting materials. One skilled in the art will appreciate that the present invention can be practiced by other than the preferred embodiments which are presented for purposes of illustration and not of limitation, and the present invention is limited only by the claims which follow.

**Claims**

1. Apparatus for transporting materials comprising:
   overhead rail means;
   at least one universal material carrier that is movably mounted to the overhead rail means, said universal material carrier being adapted to carry substantially all of the components required in a manufacturing operation; and
   at least one loading station for transferring materials to the universal material carrier.

2. The apparatus of claim 1 further comprising at least one unloading station for transferring materials off of the universal material carrier.

3. The apparatus of claim 1 wherein said universal material carrier comprises at least one carrying element for cradling and carrying materials of varying shapes and sizes.

4. The apparatus of claim 1 wherein said universal material carrier has a "C" shaped side profile.

5. The apparatus of claim 1 wherein said loading station comprises a loading platform which comprises at least one carrying element for cradling and carrying materials of varying shapes and sizes.

6. The apparatus of claim 1 wherein said universal material carrier comprises at least one carrying element and said loading station comprises a loading platform which comprises at least one carrying element.

7. The apparatus of claim 6 wherein:
said universal material carrier comprises greater than one carrying element, said elements having spaces therebetween;
said loading platform comprises greater than one carrying element, said elements having spaces therebetween; and
the carrying elements of the loading platform are oriented such that when the universal material carrier is in a loading position, they are aligned with spaces between the carrying elements of the universal material carrier.

8. The apparatus of claim 7 wherein the carrying elements of the loading platform are oriented such that when the universal material carrier is in a loading position along the overhead rail means, they are aligned with spaces between and outside the carrying elements of the universal material carrier.

9. The apparatus of claim 1 wherein said universal material carrier comprises:
at least one upright support; and
two nesting arms that protrude in a generally perpendicular direction from the upright supports.

10. The apparatus of claim 9 wherein said universal material carrier further comprises two flat arms that protrude in a generally perpendicular direction from the upright supports and that are located outside of the nesting arms.

11. The apparatus of claim 9 wherein said upright supports are connected at their top ends to a connecting means such that said connecting means connects the universal material carrier to the overhead rail means such that the universal material carrier is movably mounted to the overhead rail means.

12. The apparatus of claim 9 wherein said universal material carrier further comprises supporting and orienting elements.

13. The apparatus of claim 1 further comprising a control means for controlling the movement of the universal carrier along the overhead rail means.

14. The apparatus of claim 13 wherein the control means comprises motor means responsive to commands from an on-board computer means such that the on-board computer means is adapted to receive a delivery signal and actuate the motor in accordance with instructions carried in the delivery signal.

15. The apparatus of claim 13 wherein the delivery signal contains instructions regarding the destination of the universal material carrier on the overhead rail means.

16. The apparatus of claim 15 wherein said signals further provide instructions regarding the type of material to be loaded onto the universal material carrier.

17. The apparatus of claim 5 wherein said loading platform carrying elements comprise two inner nesting arms and two outer flat arms.

18. The apparatus of claim 1 wherein said loading station comprises:
a loading platform; and
elevator means for raising and lowering the loading platform.

19. The apparatus of claim 1 wherein the overhead rail means comprises a single rail having an I-shaped cross-section.

20. A method for transporting substantially all of the components required in a manufacturing operation comprising:
loading materials to be transported at a loading station, said loading station comprising a loading platform upon which said materials are loaded and said loading platform comprising carrying elements;
elevating the loading platform;
positioning a universal material carrier such that it can receive material from the loading platform, said universal material carrier comprising carrying elements and being movably mounted to an overhead rail means; and
transferring materials from the loading platform to the universal material carrier by lowering the loading platform such that the carrying elements of the loading platform pass freely through the horizontal planes occupied by the carrying elements of the universal material carrier.

21. The method of claim 20 further comprising:
moving the universal material carrier along an overhead rail means from the loading platform to a manufacturing module; and
transferring the materials from the universal material carrier at an unloading station which comprises an unloading platform.

22. The method of claim 20 further comprising:
detecting when a manufacturing module having an unloading station requires a new supply of a particular material;
sending a signal to a control system for the universal material carrier that indicates the material needed and the location along the overhead rail means of an unloading station where the material is to be delivered; and
controlling the movement of a universal material carrier and a loading platform such that the desired material is loaded onto a universal material carrier;

23. The method of claim 22 further comprising:
controlling the movement of the universal material carrier such that the universal material carrier moves to the designated unloading station; and
controlling the movement of the universal material carrier and the designated unloading station such that the materials on the universal material carrier are transferred to the unloading station.

24. The method of claim 23 further comprising transferring the materials to the manufacturing module from the unloading station.

25. The apparatus of claim 1, wherein said universal material carrier is adapted to carry components used to manufacture and package cigarettes that are supplied in boxes, on rolls and in stacks.

26. The apparatus of claim 25, wherein said universal material carrier is adapted to carry cigarette paper, tipping paper, carton blanks, pack blanks, carton overwrap, foil, pack innerframe and pack film overwrap.

27. The apparatus of claim 1 further comprising
a plurality of loading stations adapted to transfer stacked cigarette packaging components to said universal material carriers;
a plurality of loading stations adapted to transfer boxes to said universal material carriers; and
a plurality of loading stations adapted to transfer rolls to said universal material carriers.

28. The apparatus of claim 27, further comprising:
a plurality of loading stations adapted to transfer a plurality of cigarette paper rolls to said universal material carriers;
a plurality of loading stations adapted to transfer a plurality of tipping paper tolls to said universal material carriers;
a plurality of loading stations adapted to transfer a plurality of carton blank stacks to said universal material carriers;
a plurality of loading stations adapted to transfer a plurality of cigarette pack blank stacks to said universal material carriers;
a plurality of loading stations adapted to transfer a plurality of carton overwrap rolls to said universal material carriers;
a plurality of loading stations adapted to transfer a plurality of foil rolls to said universal material carriers;
a plurality of loading stations adapted to transfer a plurality of pack innerframe stacks to said universal material carriers; and
a plurality of loading stations adapted to transfer a plurality of pack film overwrap rolls to said universal material carriers.

29. The apparatus of claim 2, further comprising:
a plurality of unloading stations adapted to transfer stacked cigarette packaging components from said universal material carriers;
a plurality of unloading stations adapted to transfer boxes from said universal material carriers; and
a plurality of unloading stations adapted to transfer rolls from said universal material carriers.

30. The apparatus of claim 29, further comprising:
a plurality of unloading stations adapted to transfer a plurality of cigarette paper rolls from said universal material carriers;
a plurality of unloading stations adapted to transfer a plurality of tipping paper rolls from said universal material carriers;
a plurality of unloading stations adapted to transfer a plurality of carton blank stacks from said universal material carriers;
a plurality of unloading stations adapted to transfer a plurality of cigarette pack blank stacks from said universal material carriers;
a plurality of unloading stations adapted to transfer a plurality of carton overwrap rolls from said universal material carriers;
a plurality of unloading stations adapted to transfer a plurality of foil rolls from said universal material carriers;
a plurality of unloading stations adapted to transfer a plurality of pack innerframe stacks from said universal material carriers; and
a plurality of unloading stations adapted to transfer a plurality of pack film overwrap rolls from said universal material carriers.

31. A universal material carrier that is adapted to move along an overhead rail and to carry stacked components, roll components and boxed components for manufacturing and packaging cigarettes comprising:

an upright support means;

a mounting means for movably connecting said upright support means to the overhead rail;

a plurality of generally parallel nesting arms that are fixedly connected to said upright support means and that extend in a generally perpendicular direction from said upright support means;

a plurality of generally parallel flat arms that are fixedly connected to said upright support means and that extend in a generally perpendicular direction from said upright support means;

a plurality of supporting elements connected to said flat arms; and

a plurality of orienting elements connected to said flat arms.

32. The apparatus of claim 31, further comprising a plurality of orienting elements connected to said nesting arms.

33. The apparatus of claim 31, wherein said orienting elements comprise spring loaded limiting buttons.

34. The apparatus of claim 31, wherein said orienting elements comprise L-limits.

35. The apparatus of claim 31, wherein said supporting elements comprise vertical rods that extend perpendicular to the flat arms and wherein said vertical rods provide registration points for said stacked components.

36. The apparatus of Claim 31, wherein said supporting elements comprise vertical rods that extend perpendicular to the flat arms and wherein said vertical rods provide rear nesting points for said boxed components.

37. The apparatus of claim 33, wherein said spring loaded limiting buttons provide front stops for said boxed components.

38. The apparatus of claim 31, wherein:

said mounting means extends in a generally perpendicular direction from said upright support means;

and further comprising an upper bracket that extends generally vertically downwards from said mounting means.

39. The apparatus of claim 31, wherein:

each nesting arm comprises a generally flat top surface, said top surface being generally horizontal; and

each flat arm comprises a generally flat top surface, said top surface being generally in the same plain as the flat top surfaces of said nesting arms.

FIG. 1

FIG. 2

EP 0 507 575 A1

FIG. 3

FIG. 5

FIG. 4

12

**European Patent Office**

# EUROPEAN SEARCH REPORT

Application Number

## DOCUMENTS CONSIDERED TO BE RELEVANT

EP 92302891.4

| Category | Citation of document with indication, where appropriate, of relevant passages | Relevant to claim | CLASSIFICATION OF THE APPLICATION (Int. Cl.5) |
|---|---|---|---|
| X | <u>EP - A - 0 347 586</u> <br> (FOCKE) <br> * Totality * | 1-9, <br> 11-16, <br> 18-27 | B 65 G 17/20 <br> A 24 C 5/35 <br> B 65 B 41/12// |
| Y | | 10,17, <br> 29,31, <br> 34-36, <br> 38 | B 65 G 17/34 <br> A 24 C 5/20 |
| A | & US-A-5 007 522 <br> -- | 28,30 | |
| Y | <u>DE - B - 2 426 888</u> <br> (ISDATEL STWO) <br> * Fig. 4,5 * <br> -- | 10,17, <br> 29,31, <br> 34-36, <br> 38 | |
| D,A | <u>US - A - 4 907 689</u> <br> (FOCKE) <br> ---- | 1,20, <br> 31 | |

| | TECHNICAL FIELDS SEARCHED (Int. Cl.5) |
|---|---|
| | A 24 C <br> B 65 B <br> B 65 G |

The present search report has been drawn up for all claims

| Place of search | Date of completion of the search | Examiner |
|---|---|---|
| VIENNA | 27-05-1992 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)